# EUROPEAN PATENT SPECIFICATION

(11) **EP 4 385 763 B1**
(45) Date of publication and mention of the grant of the patent: **17.09.2025**
(21) Application number: 23215355.1
(22) Date of filing: 08.12.2023
(51) Int. Cl.: B60C 11/24

(54) **SYSTEM AND METHOD FOR ESTIMATION OF REMAINING TIRE MILEAGE**
SYSTEM UND VERFAHREN ZUR SCHÄTZUNG DES VERBLEIBENDEN REIFENKILOMETERSTANDS
SYSTÈME ET PROCÉDÉ D'ESTIMATION DU KILOMÉTRAGE RESTANT D'UN PNEU

(30) Priority: 13.12.2022 US 202263387153 P; 15.11.2023 US 202318509772
(43) Date of publication of application: 19.06.2024
(73) Proprietor: The Goodyear Tire & Rubber Company, Akron, OH 44316 (US)
(72) Inventor: SINGH, Kanwar Bharat, L-7363 Lorentzweiler (LU); VENKATACHALAM, Vishal, 151 48 Södertälje (SE); DERLUYN, Pieter-Jan, L-8285 Kehlen (LU)
(74) Representative: Kutsch, Bernd

(56) References cited:
- JP-A- 2022 143 401
- KR-A- 20220 077 285
- US-A1- 2019 265 129
- US-A1- 2022 324 266
- US-A1- 2022 371 382

## Description

### Field of the Invention

The invention relates generally to tire monitoring systems and methods. More particularly, the invention relates to systems and methods that predict tire wear. Specifically, the invention is directed to a system and to a method for estimating the mileage that remains of a tire before replacement is needed, which takes a current wear state of the tire into account.

### Background of the Invention

Tire wear plays an important role in vehicle factors such as safety, reliability, and performance. Tread wear, which refers to the loss of material from the tread of the tire, directly affects such vehicle factors. As a result, it is desirable to monitor and/or measure the amount of tread wear experienced by a tire, which is indicated as the tire wear state. It is to be understood that for the purpose of convenience, the terms "tread wear" and "tire wear" may be used interchangeably.

One approach to the monitoring and/or measurement of tread wear has been through the use of wear sensors disposed in the tire tread, which has been referred to as a direct method or approach. The direct approach to measuring tire wear from tire-mounted sensors has multiple challenges. Placing the sensors in an uncured or "green" tire to then be cured at high temperatures may cause damage to the wear sensors. In addition, sensor durability can prove to be an issue in meeting the millions of cycles requirement for tires. Moreover, wear sensors in a direct measurement approach must be small enough not to cause any uniformity problems as the tire rotates at high speeds. Finally, wear sensors can be expensive and add significantly to the cost of the tire.

Due to such challenges, alternative approaches have been developed, which involve prediction of tread wear over the life of the tire, including indirect estimations of the tire wear state. These alternative approaches have experienced some disadvantages in the prior art due to a lack of optimum prediction techniques, which reduces the accuracy and/or reliability of the tread wear predictions. For example, many such techniques involve data or information that is not easily obtained, such as non-standard vehicle system signals, or data that is not accurate under all driving conditions.

In addition, while some indirect estimation techniques have been developed that show improved accuracy and/or reliability, such techniques tend to indicate only the wear state of the tire. While such information is helpful, it may be of limited value for certain users. For example, some users may not fully understand an indication of tire wear state. In addition, many systems compare an estimated tire wear state to a threshold to inform the user that the tire should be replaced after the tire has reached a minimum wear state or threshold.

However, it is often desirable to advise or notify a user well in advance of a wear threshold that a tire may need to be replaced. Such advance notice enables the user to proactively schedule tire replacement as desired, and before the minimum wear threshold is reached. Advance notice also enables a manager of a fleet of vehicles to schedule tire replacement as preventive maintenance before the tire reaches the minimum wear threshold. Monitoring of remaining tire mileage also enables service centers to optimize stock management, and enables tire manufacturers to optimize manufacturing operations.

As a result, there is a need in the art for a system that accurately and reliably estimates the mileage that remains of a tire before replacement is needed, taking a current wear state of the tire into account.

US 2022/371382 A1 and US 2019/265129 A1 describe a system and a method in accordance with the preamble of claim 1 and 14, respectively.

### Summary of the Invention

The invention relates to a system in accordance with claim 1 and to a method in accordance with claim 14.

Dependent claims refer to preferred embodiments of the invention.

According to an aspect of an exemplary embodiment of the invention, a system for estimating remaining mileage of a tire supporting a vehicle tire is provided. The system includes a processor that is in electronic communication with an electronic control system of the vehicle. A calibration module determines a wear rate of the tire, and the wear rate of the tire is communicated to the processor. A severity assessment module is in electronic communication with the processor. The severity assessment module receives real-time inputs and generates a real-time driving severity number. A mileage estimation module is in electronic communication with the processor and determines a current wear state of the tire. The mileage estimation module generates an estimate of remaining mileage of the tire from the wear rate of the tire, the real-time driving severity number, and the current wear state of the tire.

### Brief Description of the Drawings

The invention will be described by way of example and with reference to the accompanying drawings, in which:
Figure 1 is a schematic perspective view of a vehicle that includes tires employing an exemplary embodiment of a system for estimating tire mileage of the present invention;
Figure 2 is a schematic representation of data transmission to a cloud-based server and to a device;
Figure 3 is a schematic diagram of aspects of an exemplary embodiment of a system for estimating tire mileage of the present invention;
Figure 4 is a schematic diagram of an aspect of the system for estimating tire mileage shown in Figure 3;
Figure 5 is a schematic diagram of another aspect of the system for estimating tire mileage shown in Figure 3; and
Figure 6 is a schematic diagram of another aspect of the system for estimating tire mileage shown in Figure 3.

Similar numerals refer to similar parts throughout the drawings.

### Definitions

"ANN" or "artificial neural network" is an adaptive tool for non-linear statistical data modeling that changes its structure based on external or internal information that flows through a network during a learning phase, used to model complex relationships between inputs and outputs or to find patterns in data.

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle without a host computer.

"Circumferential" means lines or directions extending along the perimeter of the surface of the annular tread perpendicular to the axial direction.

"Equatorial centerplane" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread element" or "traction element" means a rib or a block element defined by a shape having adjacent grooves.

### Detailed Description of Preferred Embodiments of the Invention

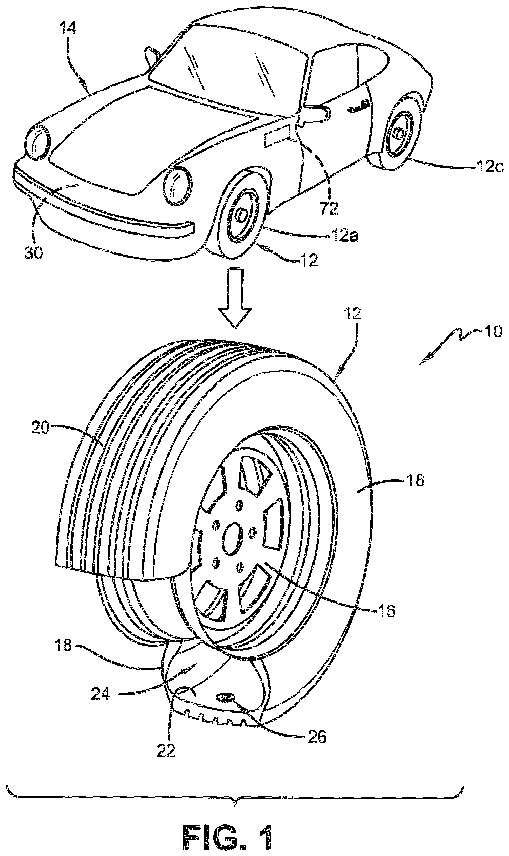

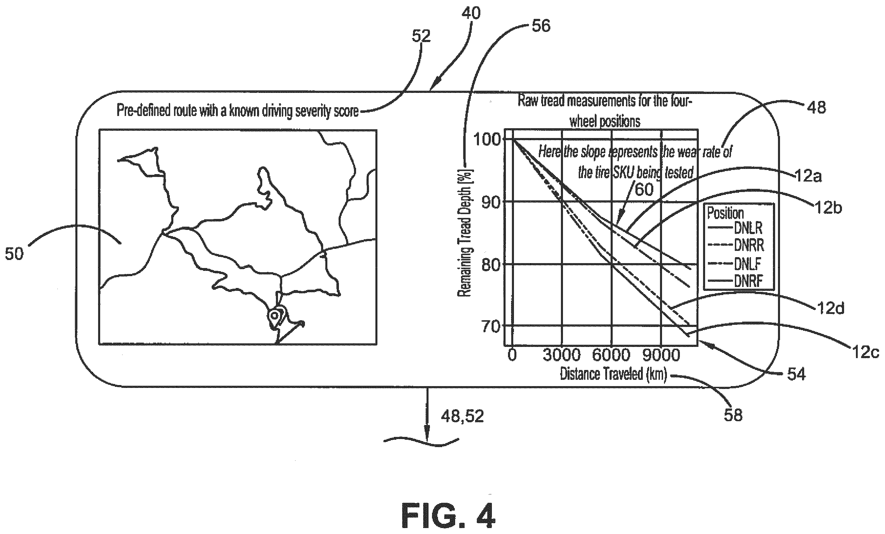

With reference to Figures 1 through 6, an exemplary embodiment of the system 10 for estimating tire mileage tire of the present invention is presented. With particular reference to Figure 1, the system 10 forecasts replacement of each tire 12 supporting a vehicle 14. The position of each tire 12 on the vehicle 14 shall be referred to herein by way of example as front left position 12a, front right position 12b (Figure 4), rear left position 12c, and rear right position 12d. While the vehicle 14 is depicted as a passenger car, the invention is not to be so restricted. The principles of the invention find application in other vehicle categories, such as commercial trucks, in which vehicles may be supported by more or fewer tires than those shown in Figure 1.

The tires 12 are of conventional construction, and each tire is mounted on a respective wheel 16 as known to those skilled in the art. Each tire 12 includes a pair of sidewalls 18 that extend to a circumferential tread 20, which wears with age from road abrasion. An innerliner 22 is disposed on the inner surface of the tire 12, and when the tire is mounted on the wheel 16, an internal cavity 24 is formed, which is filled with a pressurized fluid, such as air.

A tire sensor unit 26 may be attached to the innerliner 22 of each tire 12 by means such as an adhesive, and measures certain parameters or conditions of the tire, such as tire pressure and/or tire temperature, and may be of any known configuration. It is to be understood that the tire sensor unit 26 may be attached in such a manner, or to other components of the tire 12, such as on or in one of the sidewalls 18, on or in the tread 20, and/or on the wheel 16. The tire sensor unit 26 preferably also includes electronic memory capacity for storing identification (ID) information for each tire 12, known as tire ID information.

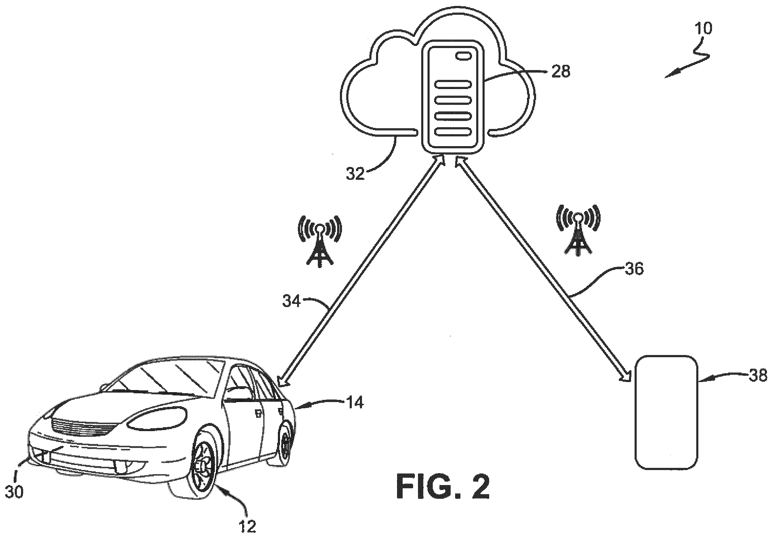

Turning to Figure 2, aspects of the system for estimating tire mileage 10 preferably are executed on a processor 28. The processor 28 enables input of parameters and execution of specific techniques, to be described below, which are stored in a suitable storage medium and are in electronic communication with the processor. The processor 28 may be mounted on the vehicle 14, may be in communication with an electronic control system 30 of the vehicle, such as the vehicle CAN bus system, and/or may be a remote processor in a cloud-based server 32.

Wireless transmission means 34, such as an antenna, may wirelessly send data from sensors that are in electronic communication with the vehicle electronic control system 30 to the processor 28. Output from the system 10 may be wirelessly transmitted by an antenna 36 from the processor 28 to a display or controller device 38 and/or to the electronic control system 30 of the vehicle 14. By way of example, the device 38 may include a device that is accessible to a user of the vehicle 14 or a technician for the vehicle, such as a smartphone, and/or a device that is accessible to a fleet manager, such as a computer.

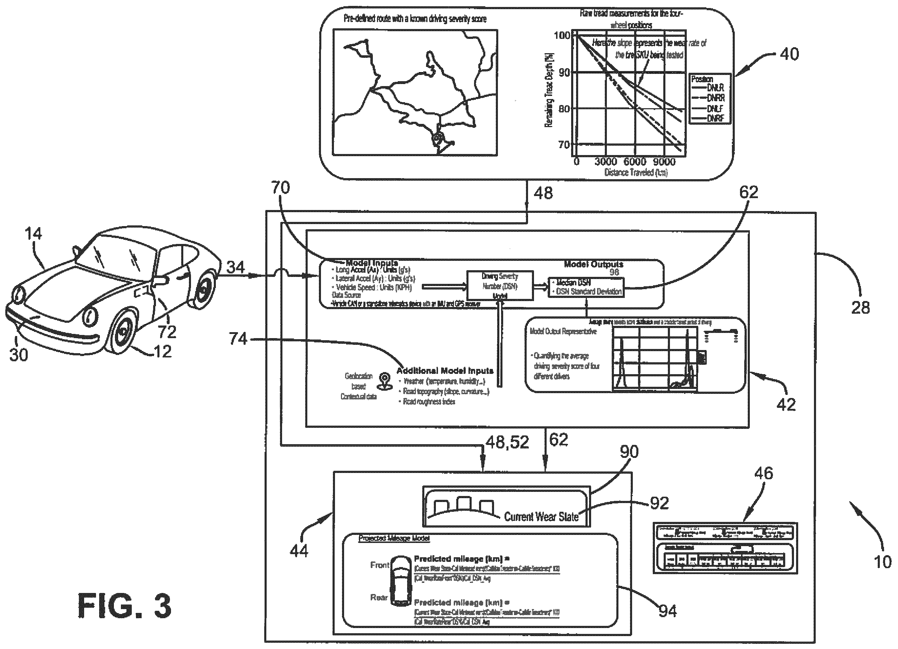

Turning to Figure 3, the system for estimating tire mileage 10 includes a calibration module 40, a severity assessment module 42, and a mileage estimation module 44. The system 10 outputs an estimate of remaining mileage 46 on each tire 12, as will be described in greater detail below. It is to be noted that, for the purpose of convenience, the term "tread wear" may be used interchangeably herein with the term "tire wear".

With additional reference to Figure 4, the calibration module 40 outputs a determination of a wear rate 48 of each tire 12, which is the amount of wear experienced by a tire over a defined period of time. Preferably, the wear rate 48 is determined or quantified by operating the vehicle 14 over a known or predetermined route 50 that has a known or predetermined driving severity score 52. The driving severity score 52 takes into account the amount of turns, starts, and stops in the route 50. A route that includes more turns, more starts, and/or more stops than another route is considered to be more severe, and will thus have a higher driving severity score 52. A route that has a higher driving severity score 52 results in more wear on the tires 12 and thus a higher wear rate 48.

By operating the vehicle 14 over the route 50 with a known driving severity score 52, a plot 54 of remaining tread depth 56 versus distance traveled 58 may be generated. The plot 54 yields a line 60 for each tire 12 on the vehicle 14. The slope of each line 60 provides the wear rate 48 for each respective tire 12. The wear rate 48 may be indexed or categorized according to each type of tire 12, such as by a stock keeping unit (SKU) number or other identifying number. The indexed wear rate 48 may be stored in an electronic memory that is stored on or transmitted to the processor 28. The wear rate 48 may be expressed as a rate for the front left 12a and front right 12b tire positions, and as a rate for the rear left 12c and rear right 12d positions.

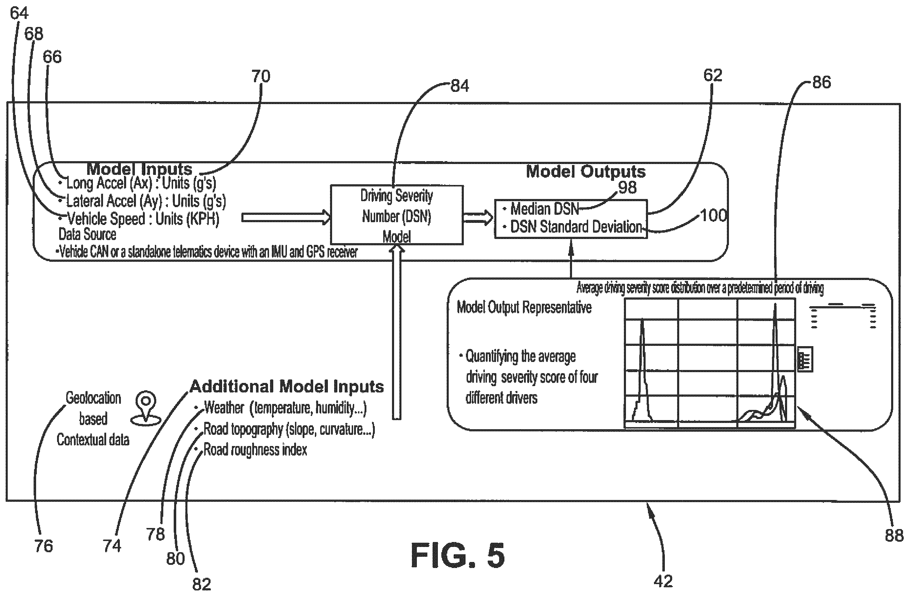

Returning to Figure 3, the severity assessment module 42 is stored on or is in electronic communication with the processor 28. With additional reference to Figure 5, the severity assessment module 42 generates a real-time driving severity number 62. The real-time driving severity number 62 takes into account the amount of turns, starts and stops in the route driven by the vehicle 14, as described above, and the driving style of the driver of the vehicle. For example, more aggressive driving, such as aggressive starts and stops, generates more frictional energy, which increases tread wear.

The severity assessment module 42 determines or quantifies the real-time driving severity number 62 by monitoring and receiving real-time inputs 70. The inputs 70 include a speed 64 of the vehicle 14 and linear accelerations of the vehicle, which include a longitudinal acceleration 66 and a lateral acceleration 68, measured over a pre-defined period or distance 86 of driving. By way of example, the pre-defined period may be a driving distance of 500 kilometers (km).

The speed 64 of the vehicle 14 may be obtained by a global positioning system (GPS) unit that is in electronic communication with an electronic control system 30 of the vehicle, such as the vehicle CAN bus system. The longitudinal acceleration 66 and lateral acceleration 68 may be measured with an inertial measurement unit 72 that is mounted on the vehicle 14 and may be included in a telematic control unit. A telematic control unit is a control and communication system that enables collection of vehicle data and transmission of the data to remote units or cloud computing services, and is preferably in electronic communication with an electronic control system 30 of the vehicle, such as the vehicle CAN bus system.

The severity assessment module 42 may optionally receive additional inputs 74 to enhance the determination of the real-time driving severity number 62. The additional inputs 74 preferably include geolocation-based contextual data 76, as the position of the vehicle 14 is known from the GPS unit. The geolocation-based contextual data 76 may include weather conditions 78, such as temperature, humidity, and the like. The geolocation-based contextual data 76 may also include road topography 80, such as slope, curvature, and the like. The geolocation-based contextual data 76 may further include a road roughness index 82, such as an international roughness index (IRI), which is a roughness index obtained from measured longitudinal road profiles. The additional inputs 74 may be received from a remote service and/or from the cloud-based server 32.

The severity assessment module 42 includes a driving severity number model 84, which receives the real-time inputs 70 and any additional inputs 74. The driving severity number model 84 determines the real-time driving severity number 62, which may correspond to a force severity on the tire 12. An exemplary technique that may be employed by the driving severity number model 84 includes a determination of force severity on the tire 12 as described in U.S. Patent Number 9,873,293, which is owned by the same assignee as the present invention, The Goodyear Tire & Rubber Company. The driving severity number model 84 thus determines the real-time driving severity number 62, which may be expressed as a distribution 88 over the pre-defined driving period 86, as will be described in greater detail below.

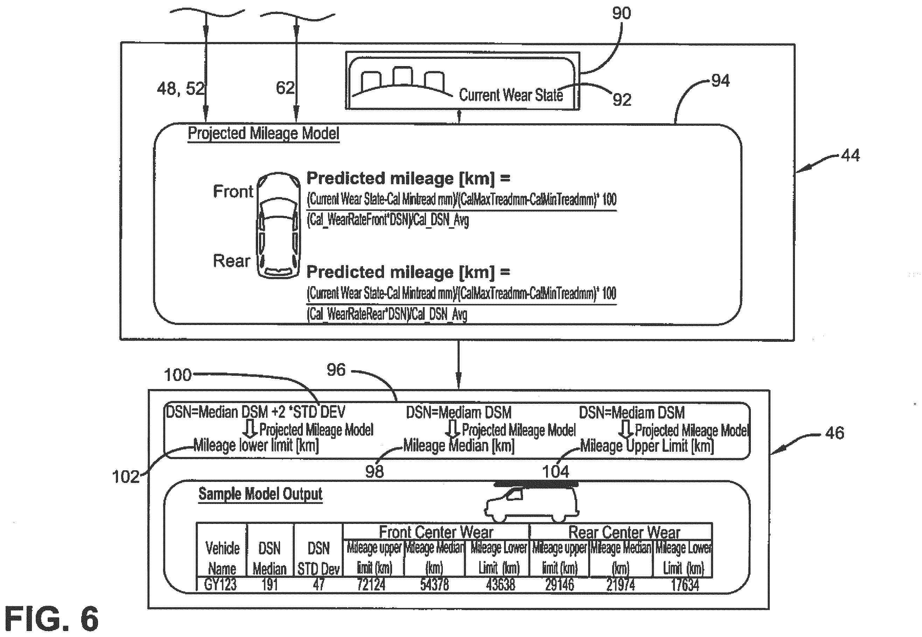

Returning to Figure 3, the mileage estimation module 44 is stored on or is in electronic communication with the processor 28. With additional reference to Figure 6, the mileage estimation module 44 includes a wear state estimator 90 that determines a current wear state 92 of the tire 12, which may be expressed as a tread depth of the tire. If the tire 12 is new, the current wear state 92 or tread depth may be known from a stock keeping unit (SKU) number or other identifying number of the tire.

If the tire 12 is worn, the current wear state 92 or tread depth may be determined by employing a wear estimation technique. Exemplary techniques are described in U.S. Patent Numbers 9,663,115; 9,878,721; 10,603,962; 9,821,611; 9,610,810; 9,873,293; 9,259,976; 9,050,864; 9,428,013; 9,442,045; and in U.S. Patent Application Publication Number 2020/0182746. Alternatively, if the tire 12 is worn, the current wear state 92 or tread depth may be determined by a manual measurement of the depth of the tread 20. The current wear state 92 may be expressed as a remaining tread depth for the front left 12a and front right 12b tire positions, and as a remaining tread depth for the rear left 12c and rear right 12d tire positions.

The mileage estimation module 44 also includes a mileage projection model 94, which receives the current wear state 92 of the tire 12 from the wear state estimator 90. The mileage projection model 94 also receives the wear rate 48 and the driving severity score 52 over the known route 50 from the calibration module 40, and the driving severity number 62 from the severity assessment module 42. Preferably, the mileage projection model 94 determines an estimate of remaining mileage 46 for the front left 12a and front right 12b tire positions, and an estimate of the remaining mileage for the tires for the rear left 12c and rear right 12d tire positions.

Preferably, the mileage projection model 94 determines an estimate of remaining mileage 46 for the front left 12a and front right 12b tire positions as follows: Predicted mileage = (Current Wear State - Cal MinTread)/(Cal MaxTread - Cal MinTread) * 100 (Cal_WearRateFront * DSN)/Cal_DSN_Avg

Where:
Predicted mileage is the estimate of remaining mileage 46 for the front left 12a and front right 12b tire positions.
Current Wear State is the current wear state 92 or tread depth of the tire 12 for the front left 12a and front right 12b tire positions from the wear state estimator 90.
Cal_MinTread is a predetermined value of the depth of the tread 20 of the tire 12 at a minimum legal limit.
Cal_MaxTread is a predetermined value of the depth of the tread 20 of the tire 12 when the tire is new.
Cal_WearRateFront is the wear rate 48 of the front left 12a and front right 12b tire positions from the calibration module 40.
DSN is the real-time driving severity number 62 from the driving severity number model 84.
Cal_DSN_Avg is the driving severity score 52 over the known route 50 from the calibration module 40.

Preferably, the mileage projection model 94 determines an estimate of remaining mileage 46 for the rear left 12c and rear right 12d tire positions as follows: Predicted mileage = (Current Wear State - Cal MinTread)/(Cal MaxTread - Cal MinTread) * 100 (Cal_WearRateRear * DSN)/Cal_DSN_Avg

Where:
Predicted mileage is the estimate of remaining mileage 46 for the rear left 12c and rear right 12d positions.
Current Wear State is the current wear state 92 or tread depth of the tire 12 for the rear left 12c and rear right 12d positions from the wear state estimator 90.
Cal_MinTread is a predetermined value of the depth of the tread 20 of the tire 12 at a minimum legal limit.
Cal_MaxTread is a predetermined value of the depth of the tread 20 of the tire 12 when the tire is new.
Cal_WearRateFront is the wear rate 48 of the front left 12a and front right 12b tire positions from the calibration module 40.
DSN is the real-time driving severity number 62 from the driving severity number model 84.
Cal_DSN_Avg is the driving severity score 52 over the known route 50 from the calibration module 40.

Through the mileage projection model 94, the mileage estimation module 44 thus generates an estimate of remaining mileage 46 for the front left 12a and front right 12b tire positions, and an estimate of the remaining mileage for the rear left 12c and rear right 12d tire positions. The estimates of remaining mileage 46 preferably are in terms of distance, such as kilometers or miles. In addition, the estimates of remaining mileage 46 may be expressed as a prediction interval 96, rather than a single point estimate.

More particularly, because the driving severity number model 84 may express driving severity as a distribution 88, a median value 98 of the distribution and a standard deviation 100 of the distribution may be employed in the mileage projection model 94 to generate the prediction interval 96 with a lower limit 102 and an upper limit 104. For example, the lower limit 102 of the prediction interval 96 may be the median value 98 plus twice the standard deviation 100, while the upper limit 104 may be the median value minus twice the standard deviation.

In this manner, the system for estimating tire mileage 10 accurately and reliably estimates the mileage that remains of a tire 12 before replacement of the tire is needed, taking into account the current wear state of the tire and additional factors. As described above, the system for estimating tire mileage 10 includes the calibration module 40, the severity assessment module 42, and the mileage estimation module 44, to generate the estimate of remaining mileage 46 on each tire 12.

The estimate of remaining mileage 46 may be wirelessly transmitted from the processor 28 to a display or controller device 38 and/or to the electronic control system 30 of the vehicle 14. The device 38 may include a device that is accessible to a user of the vehicle 14 or a technician for the vehicle, such as a smartphone, and/or a device that is accessible to a fleet manager, such as a computer. The estimate of remaining mileage 46 enables a user of the vehicle 14 to proactively schedule tire replacement as desired, and before a minimum wear threshold is reached. The estimate of remaining mileage 46 also enables a manager of a fleet of vehicles 14 to schedule tire replacement as preventive maintenance before the tire 12 reaches a minimum wear threshold. The estimate of remaining mileage 46 also enables service centers to optimize stock management, and enables tire manufacturers to optimize manufacturing operations.

The present invention also includes a method for estimating tire mileage. The method includes steps in accordance with the description that is presented above and shown in Figures 1 through 6.

It is to be understood that the structure of the above-described system for estimating tire mileage tire may be altered or rearranged, or components or steps known to those skilled in the art omitted or added, without affecting the overall concept or operation of the invention. For example, electronic communication may be through a wired connection or wireless communication without affecting the overall concept or operation of the invention. Such wireless communications include radio frequency (RF) and Bluetooth^{®} communications.

In addition, the above-described determinations of the system for estimating tire mileage 10 may be executed based upon measurements from a center of the tread 20 of each tire 12. It is to be understood that wear may additionally or alternatively be determined for other areas of the tread 20 of each tire 12, such as measurements from a shoulder of the tread, or from multiple areas of the tread, without affecting the overall concept or operation of the invention.

## Claims

1. A system for estimating remaining mileage of a tire (12) supporting a vehicle (14), the system (10) comprising:
a processor (28) in electronic communication with an electronic control system (30) of the vehicle (14); and
a calibration module (40) configured for determining a wear rate of the tire (12) and for communicating the wear rate of the tire (12) to the processor (28);
**characterized in that** the system further comprises:
a severity assessment module (42) in electronic communication with the processor (28), the severity assessment module being configured for receiving real-time inputs and generating a real-time driving severity number; and
a mileage estimation module (44) in electronic communication with the processor (28), the mileage estimation module being configured for determining a current wear state of the tire (12) and for generating an estimate of remaining mileage of the tire from the wear rate of the tire, the real-time driving severity number, and the current wear state of the tire.

2. The system of claim 1, wherein in the calibration module (40) is configured to determine the wear rate of the tire (12) from a plot of remaining tread depth versus distance traveled over a predetermined route, wherein the route includes a predetermined driving severity score.

3. The system of claim 1 or 2, wherein the wear rate is expressed as a first rate for front left and front right tire positions, and as a second rate for rear left and rear right tire positions.

4. The system of at least one of the previous claims, wherein real-time inputs received by the severity assessment module (42) include a speed of the vehicle, a longitudinal acceleration of the vehicle, and a lateral acceleration of the vehicle; and/or wherein the real-time inputs received by the severity assessment module (42) include geolocation-based contextual data, said geolocation-based contextual data preferably including at least one or two or all of weather condition data, road topography data and a road roughness index.

5. The system of at least one of the previous claims, wherein the real-time inputs received by the severity assessment module (42) are measured over a pre-defined driving period.

6. The system of at least one of the previous claims, wherein the real-time driving severity number generated by the severity assessment module (42) is expressed as a distribution over the pre-defined driving period.

7. The system of at least one of the previous claims, wherein the current wear state of the tire (12) is expressed as a first remaining tread depth for front left and front right tire positions, and as a second remaining tread depth for rear left and rear right tire positions.

8. The system of at least one of the previous claims, wherein the mileage estimation module (44) includes a wear state estimator (90) for determining the current wear state of the tire (12).

9. The system of claim 8, wherein the mileage estimation module (44) includes a mileage projection model (94), the mileage projection model being configured for receiving the current wear state of the tire from the wear state estimator (90), the wear rate from the calibration module (40), and the driving severity number from the severity assessment module (42).

10. The system of claim 9, wherein the mileage projection model (94) is configured to receive a predetermined driving severity score from the calibration module (40) and for employing the predetermined driving severity score in the generation of the estimate of remaining mileage on the tire (12).

11. The system of claim 9 or 10, wherein the mileage projection model (94) is configured to receive a predetermined value of a depth of a tread of the tire (12) at a minimum legal limit and for employing the predetermined value in the generation of the estimate of remaining mileage on the tire; and/or wherein the mileage projection model (94) is configured to receive a predetermined value of a depth of a tread of the tire (12) when the tire is new and for employing the predetermined value in the generation of the estimate of remaining mileage on the tire.

12. The system of at least one of the previous claims, wherein the estimate of remaining mileage is determined as a first estimate of remaining mileage for front left and front right tire positions, and as a second estimate of remaining mileage for rear left and rear right tire positions; and/or wherein the estimate of remaining mileage is expressed as a prediction interval, the prediction interval including a lower limit and an upper limit.

13. The system of at least one of the previous claims, wherein the estimate of remaining mileage is electronically communicated to a device that is accessible to at least one of a user of the vehicle, a technician for the vehicle, and a fleet manager.

14. A method of estimating remaining mileage of a tire (12) supporting a vehicle (14), the method comprising:
providing a processor (28) in electronic communication with an electronic control system (30) of the vehicle (14); and
providing a calibration module (40), the calibration module (40) determining a wear rate of the tire (12) and communicating the wear rate of the tire (12) to the processor (28);
**characterized in that** the method further comprises:
providing a severity assessment module (42) in electronic communication with the processor (28), the severity assessment module receiving real-time inputs and generating a real-time driving severity number; and
providing a mileage estimation module (44) in electronic communication with the processor (28), the mileage estimation module determining a current wear state of the tire (12) and generating an estimate of remaining mileage of the tire from the wear rate of the tire, the real-time driving severity number, and the current wear state of the tire.

15. The method of claim 14 wherein the method is executed using a system in accordance with at least one of the claims 1 to 13.

## Patentansprüche

1. System zum Schätzen der verbleibenden Laufleistung eines Luftreifens (12), der ein Fahrzeug (14) trägt, wobei das System (10) Folgendes umfasst:
einen Prozessor (28), der elektronisch mit einem elektronischen Steuersystem (30) des Fahrzeugs (14) verbunden ist; und
ein Modul der Kalibrierung (40), das zum Bestimmen einer Verschleißrate des Luftreifens (12) und zum Übermitteln der Verschleißrate des Luftreifens (12) an den Prozessor (28) ausgebildet ist;
**dadurch gekennzeichnet, dass** das System ferner Folgendes umfasst:
ein Modul der Bewertung des Schwierigkeitsgrades (42), das elektronisch mit dem Prozessor (28) verbunden ist, wobei das Modul der Bewertung des Schwierigkeitsgrades ausgebildet ist, um Eingaben in Echtzeit zu empfangen und um einen Wert des Fahrschwierigkeitsgrades in Echtzeit zu erzeugen; und
ein Modul der Schätzung des Laufleistung (44), das elektronisch mit dem Prozessor (28) verbunden ist; wobei das Modul der Schätzung der Laufleistung ausgebildet ist, um einen aktuellen Verschleißzustand des Luftreifens (12) zu bestimmen und um eine Schätzung der verbleibenden Laufleistung des Luftreifens von der Verschleißrate des Luftreifens, des Fahrschwierigkeitsgrades in Echtzeit und des aktuellen Verschleißzustandes des Luftreifens zu erzeugen.

2. System nach Anspruch 1, wobei das Modul der Kalibrierung (40) ausgebildet ist, um den Verschleißrate des Luftreifens (12) aus einem Diagramm zu bestimmen, das die verbleibende Profiltiefe in Abhängigkeit von der auf einer vorgegebenen Strecke zurückgelegten Strecke wiedergibt; wobei die Strecke einen vorgegebenen Schwierigkeitsgrad des Fahrens umfasst.

3. System nach Anspruch 1 oder 2, wobei die Verschleißrate in Form einer ersten Rate für die Positionen des vorderen linken und vorderen rechten Luftreifens und in Form einer zweiten Rate für die Positionen des hinteren linken und hinteren rechten Luftreifens ausgedrückt wird.

4. System nach mindestens einem der vorhergehenden Ansprüche, wobei die Eingaben in Echtzeit, die von dem Modul der Bewertung des Schwierigkeitsgrades (42) empfangen wurden, eine Fahrzeuggeschwindigkeit, eine Fahrzeugbeschleunigung in Längsrichtung und eine Fahrzeugbeschleunigung in Querrichtung umfassen; und/oder wobei die Eingaben in Echtzeit, die von dem Modul der Bewertung des Schwierigkeitsgrades (42) empfangen wurden, Kontextdaten umfassen, die auf einer Geolokalisierung basieren; wobei die oben genannten Kontextdaten, die auf einer Geolokalisierung basieren, vorzugsweise mindestens eine oder zwei Daten oder alle Daten umfassen, die aus Wetterdaten, Daten der Straßentopografie und einem Index der Straßenrauhigkeit ausgewählt sind.

5. System nach mindestens einem der vorhergehenden Ansprüche, wobei die vom dem Modul der Bewertung des Schwierigkeitsgrades (42) empfangenen Eingaben in Echtzeit über eine vordefinierte Fahrzeit gemessen werden.

6. System nach mindestens einem der vorhergehenden Ansprüche, wobei der vom dem Modul der Bewertung des Schwierigkeitsgrades (42) erzeugte Wert des Fahrschwierigkeitsgrades in Echtzeit in Form einer Verteilung über die vordefinierte Fahrzeit ausgegeben wird.

7. System nach mindestens einem der vorhergehenden Ansprüche, wobei der aktuelle Verschleißzustand des Luftreifens (12) in Form einer ersten verbleibenden Profiltiefe für Positionen des Luftreifens vorne links und vorne rechts und in Form einer zweiten verbleibenden Profiltiefe für Positionen des Luftreifens hinten links und hinten rechts ausgedrückt wird.

8. System nach mindestens einem der vorhergehenden Ansprüche, wobei das Modul der Schätzung des Laufleistung (44) eine Schätzvorrichtung des Verschleißzustandes (90) umfasst, die dazu bestimmt ist, den aktuellen Verschleißzustand des Luftreifens (12) zu bestimmen.

9. System nach Anspruch 8, wobei das Modul der Schätzung des Laufleistung (44) ein Modell der Laufleistungsprojektion (94) umfasst; wobei das Modell der Laufleistungsprojektion (94) ausgebildet ist, um den aktuellen Verschleißzustand des Luftreifens von der Schätzvorrichtung des Verschleißzustandes (90), der Verschleißrate von dem Modul der Kalibrierung (40) und den Fahrschwierigkeitsgrad von dem Modul der Bewertung des Schwierigkeitsgrades (42) zu empfangen.

10. System nach Anspruch 9, wobei das Modell der Laufleistungsprojektion (94) ausgebildet ist, um einen vorbestimmten Wert des Fahrschwierigkeitsgrades von dem Modul der Kalibrierung zu empfangen und um den vorbestimmten Wert des Fahrschwierigkeitsgrades bei der Erzeugung der Schätzung der verbleibenden Laufleistung des Luftreifens (12) zu verwenden.

11. System nach Anspruch 9 oder 10, wobei das Modell der Kilometerprojektion (94) ausgebildet ist, um einen vorbestimmten Wert einer Profiltiefe des Luftreifens (12) an einer gesetzlichen Mindestgrenze zu empfangen und um den vorbestimmten Wert bei der Erzeugung der Schätzung der verbleibenden Laufleistung des Luftreifens zu verwenden; und/oder wobei das Modell der Kilometerprojektion (94) ausgebildet ist, um einen vorbestimmten Wert einer Profiltiefe des Luftreifens (12) zu empfangen, wenn der Luftreifen neu ist, und um den vorbestimmten Wert bei der Erzeugung der Schätzung der verbleibenden Laufleistung des Luftreifens zu verwenden.

12. System nach mindestens einem der vorhergehenden Ansprüche, wobei die Schätzung der verbleibenden Laufleistung in Form einer ersten Schätzung der verbleibenden Laufleistung für Positionen des vorderen linken und vorderen rechten Luftreifens und in Form einer zweiten Schätzung der verbleibenden Laufleistung für Positionen des hinteren linken und hinteren rechten Luftreifens bestimmt wird; und/oder wobei die Schätzung der verbleibenden Laufleistung in Form eines Vorhersageintervalls ausgedrückt wird, wobei das Vorhersageintervall eine untere Grenze und eine obere Grenze umfasst.

13. System nach mindestens einem der vorhergehenden Ansprüche, wobei die Schätzung der verbleibenden Laufleistung elektronisch mit einer Vorrichtung verbunden ist, die mindestens einer Person zugänglich ist, die aus einem Fahrzeugbenutzer, einem Techniker für das Fahrzeug und einem Flottenmanager ausgewählt ist.

14. Verfahren zum Schätzen der verbleibenden Laufleistung eines Luftreifens (12), der ein Fahrzeug (14) trägt, wobei das Verfahren das Folgende umfasst:
das Bereitstellen eines Prozessors (28), der elektronisch mit einem elektronischen Steuersystem (30) des Fahrzeugs (14) verbunden ist; und
das Bereitstellen eines Moduls der Kalibrierung (40), das zum Bestimmen einer Verschleißrate des Luftreifens (12) und zum Übermitteln der Verschleißrate des Luftreifens (12) an den Prozessor (28) ausgebildet ist;
**dadurch gekennzeichnet, dass** das Verfahren ferner Folgendes umfasst:
das Bereitstellen eines Moduls der Bewertung des Schwierigkeitsgrades (42), das elektronisch mit dem Prozessor (28) verbunden ist, wobei das Modul der Bewertung des Schwierigkeitsgrades ausgebildet ist, um Eingaben in Echtzeit zu empfangen und um einen Wert des Fahrschwierigkeitsgrades in Echtzeit zu erzeugen; und
das Bereitstellen eines Moduls der Schätzung des Laufleistung (44), das elektronisch mit dem Prozessor (28) verbunden ist; wobei das Modul der Schätzung der Laufleistung ausgebildet ist, um einen aktuellen Verschleißzustand des Luftreifens (12) zu bestimmen und um eine Schätzung der verbleibenden Laufleistung des Luftreifens von der Verschleißrate des Luftreifens, des Fahrschwierigkeitsgrades in Echtzeit und des aktuellen Verschleißzustandes des Luftreifens zu erzeugen.

15. Verfahren nach Anspruch 14, wobei das Verfahren unter Verwendung eines Systems gemäß mindestens einem der Ansprüche 1 bis 13 ausgeführt wird.

## Revendications

1. Système destiné à estimer le kilométrage restant d'un bandage pneumatique (12) qui supporte un véhicule (14), dans lequel le système (10) comprend :
un processeur (28) qui est mis en communication par voie électronique avec un système de commande électronique (30) du véhicule (14) ; et
un module d'étalonnage (40) qui est configuré pour déterminer un taux d'usure du bandage pneumatique (12) et pour communiquer le taux d'usure du bandage pneumatique (12) au processeur (28) ;
**caractérisé en ce que** le système comprend en outre :
un module d'évaluation du degré de difficulté (42) qui est mis en communication par voie électronique avec le processeur (28), dans lequel le module d'évaluation du degré de difficulté est configuré pour recevoir des entrées en temps réel et pour générer une valeur de degré de difficulté de conduite en temps réel ; et
un module d'estimation du kilométrage (44) qui est mis en communication par voie électronique avec le processeur (28) ; dans lequel le module d'estimation du kilométrage est configuré pour déterminer un état d'usure en vigueur du bandage pneumatique (12) et pour générer une estimation du kilométrage restant du bandage pneumatique par rapport au taux d'usure du bandage pneumatique, la valeur du degré de difficulté de conduite en temps réel, et l'état d'usure en vigueur du bandage pneumatique.

2. Système selon la revendication 1, dans lequel le module d'étalonnage (40) est configuré pour déterminer le taux d'usure du bandage pneumatique (12) à partir d'un graphique qui reprend la profondeur de sculpture restante par rapport à la distance parcourue sur une route prédéterminée ; dans lequel la route englobe un score du degré de difficulté de conduite qui a été prédéterminé.

3. Système selon la revendication 1 ou 2, dans lequel le taux d'usure est exprimé sous la forme d'un premier taux pour les positions du bandage pneumatique avant à gauche et avant à droite et sous la forme d'un deuxième taux pour les positions du bandage pneumatique arrière à gauche et arrière à droite.

4. Système selon au moins une des revendications précédentes, dans lequel les entrées en temps réel qui ont été reçues par le module d'évaluation du degré de difficulté (42) englobent une vitesse du véhicule, une accélération du véhicule dans la direction longitudinale et une accélération du véhicule dans la direction latérale ; et/ou dans lequel les entrées en temps réel qui ont été reçues par le module d'évaluation du degré de difficulté (42) englobent des données contextuelles qui se basent sur la géolocalisation ; dans lequel lesdites données contextuelles qui se basent sur une géolocalisation englobent de préférence au moins une ou deux données ou la totalité des données choisies parmi des données de conditions atmosphériques, des données de la topographie de la route et un indice de rugosité de la route.

5. Système selon au moins une des revendications précédentes, dans lequel les entrées en temps réel qui ont été reçues par le module d'évaluation du degré de difficulté (42) sont mesurées sur un laps de temps de conduite qui a été prédéfini.

6. Système selon au moins une des revendications précédentes, dans lequel la valeur du degré de difficulté de conduite en temps réel qui a été générée par le module d'évaluation du degré de difficulté (42) est exprimée sous la forme d'une distribution sur le laps de temps de conduite qui a été prédéfini.

7. Système selon au moins une des revendications précédentes, dans lequel l'état d'usure en vigueur du bandage pneumatique (12) est exprimé sous la forme d'une première profondeur de sculpture restante pour des positions du bandage pneumatique avant à gauche et avant à droite et sous la forme d'une deuxième profondeur de sculpture restante pour des positions du bandage pneumatique arrière à gauche et arrière à droite.

8. Système selon au moins une des revendications précédentes, dans lequel le module d'estimation du kilométrage (44) englobe un dispositif d'estimation de l'état d'usure (90) qui est destiné à déterminer l'état d'usure en vigueur du bandage pneumatique (12).

9. Système selon la revendication 8, dans lequel le module d'estimation du kilométrage (44) englobe un modèle de projection du kilométrage (94) ; dans lequel le modèle de projection du kilométrage (94) est configuré pour recevoir l'état d'usure en vigueur du bandage pneumatique à partir du dispositif d'estimation de l'état d'usure (90), le taux d'usure à partir module d'étalonnage (40) et la valeur de degré de difficulté de conduite à partir du module d'évaluation du degré de difficulté (42).

10. Système selon la revendication 9, dans lequel le modèle de projection du kilométrage (94) est configuré pour recevoir un score du degré de difficulté de conduite qui a été prédéterminé, à partir du module d'étalonnage, et pour utiliser le score du degré de difficulté de conduite qui a été prédéterminé dans la génération de l'estimation du kilométrage restant sur le bandage pneumatique (12).

11. Système selon la revendication 9 ou 10, dans lequel le modèle de projection du kilométrage (94) est configuré pour recevoir une valeur prédéterminée d'une profondeur de sculpture du bandage pneumatique (12) à une limite légale minimale et pour utiliser la valeur prédéterminée dans la génération de l'estimation du kilométrage restant sur le bandage pneumatique ; et/ou dans lequel le modèle de projection du kilométrage (94) est configuré pour recevoir une valeur prédéterminée d'une profondeur de sculpture du bandage pneumatique (12) lorsque le bandage pneumatique est neuf et pour utiliser la valeur prédéterminée dans la génération de l'estimation du kilométrage restant sur le bandage pneumatique.

12. Système selon au moins une des revendications précédentes, dans lequel l'estimation du kilométrage restant est déterminée sous la forme d'une première estimation du kilométrage restant pour des positions du bandage pneumatique avant à gauche et avant à droite, et sous la forme d'une deuxième estimation du kilométrage restant pour des positions du bandage pneumatique arrière à gauche et arrière à droite ; et/ou dans lequel l'estimation du kilométrage restant est exprimée sous la forme d'un intervalle de prédiction ; dans lequel intervalle de prédiction englobe une limite inférieure et la limite supérieure.

13. Système selon au moins une des revendications précédentes, dans lequel l'estimation du kilométrage restant est mise en communication par voie électronique avec un dispositif qui est accessible à au moins une personne choisie parmi un utilisateur du véhicule, un technicien pour le véhicule et un gestionnaire de flotte.

14. Procédé d'estimation du kilométrage restant d'un bandage pneumatique (12) qui supporte un véhicule (14), dans lequel le procédé comprend le fait de :
procurer un processeur (28) qui est mis en communication par voie électronique avec un système de commande électronique (30) du véhicule (14) ; et
procurer un module d'étalonnage (40) qui est configuré pour déterminer un taux d'usure du bandage pneumatique (12) et pour communiquer le taux d'usure du bandage pneumatique (12) au processeur (28) ;
**caractérisé en ce que** le procédé comprend en outre le fait de :
procurer un module d'évaluation du degré de difficulté (42) qui est mis en communication par voie électronique avec le processeur (28), dans lequel le module d'évaluation du degré de difficulté est configuré pour recevoir des entrées en temps réel et pour générer une valeur de degré de difficulté de conduite en temps réel ; et
procurer un module d'estimation du kilométrage (44) qui est mis en communication par voie électronique avec le processeur (28) ; dans lequel le module d'estimation du kilométrage est configuré pour déterminer un état d'usure en vigueur du bandage pneumatique (12) et pour générer une estimation du kilométrage restant du bandage pneumatique par rapport au taux d'usure du bandage pneumatique, la valeur du degré de difficulté de conduite en temps réel, et l'état d'usure en vigueur du bandage pneumatique.

15. Procédé selon la revendication 14, dans lequel le procédé est mis en œuvre en utilisant un système en conformité avec au moins une des revendications 1 à 13.
